# EUROPEAN PATENT SPECIFICATION

(11) **EP 2 517 985 B1**
(45) Date of publication and mention of the grant of the patent: **30.07.2014**
(21) Application number: 11164010.8
(22) Date of filing: 28.04.2011
(51) Int. Cl.: B65G 13/075

(54) **Roller conveyor module for a gravity-actuated roller conveyer system and method for speed control**
Rollenförderermodul für ein schwerkraftbetriebenes Rollenförderersystem und Verfahren zur Geschwindigkeitskontrolle
Module de transporteur à rouleaux pour système de transporteur à rouleaux activé par gravité et procédé de contrôle de la vitesse

(43) Date of publication of application: 31.10.2012
(73) Proprietor: Interroll Holding AG, 6592 Sant' Antonino (CH)
(72) Inventor: Rambaud, Francis, 6592, S. ANTONINO (CH)
(74) Representative: Eisenführ Speiser

(56) References cited:
- WO-A1-2006/005785
- DE-A1- 1 481 291
- DE-A1- 2 226 096
- JP-A- 11 263 412
- JP-U- H0 249 922
- JP-U- H0 556 819
- JP-U- 63 100 413
- US-A- 3 537 568
- US-A- 4 215 775
- US-A- 5 890 577

## Description

The invention relates to a roller conveyor module for a gravity-actuated roller conveyor system, comprising: a conveyor line consisting of a plurality of conveyor rollers arranged one behind the other, said conveyor line forming an upper support surface for conveying items in a conveying direction and defined by the perimeter of the conveyor rollers.

The invention further relates to a method for speed control in a gravity-actuated roller conveyor system, comprising the steps: conveying items in a conveying direction on an upper support surface defined by the perimeter of a plurality of conveyor rollers of a conveyor line arranged one behind the other.

Gravity-actuated roller conveyor systems are used for conveying items, i.e., in the storage of pallets, containers, boxes or the like. Roller conveyor modules for a gravity-actuated roller conveyor system are made up of a plurality of adjacent conveyor rollers that form a conveyor line. The outer perimeter of the conveyor rollers defines an upper support surface of which conveying items, for example pallets or containers, are placed and conveyed in a conveying direction. Under operating conditions the roller conveyor module is usually arranged such that the conveying direction is slightly angled downwards such that the conveyed items are conveyed along the conveying direction due to gravity. At the downstream end of a gravity-actuated roller conveyor system the conveyed items typically are transferred to a further handling system, for example a fork lifter, transtoker or another conveying system, particularlv to a further conveyor of a fork lifter, transtoker or another conveying system.

JP H 05 56819 U discloses a temporarily stopping device for an article carried on a roller conveyor to prevent the deformation or damage of an article carried. JP H 05 56819 U discloses that a stopper, which stayed below the transferring surface, is raised before an article reaches the position of the stopper. At the same time with this action, two carrier rollers standing behind the stopper are stopped by a brake shoe. Accordingly, the article that was transferred toward the stopper is brought into a brake-applied state when the article rides on the two carrier rollers stopped.

JP 63-100 413 discloses a roller conveyor module according to the preamble of claim 1.

In gravity-actuated roller conveyor systems and roller conveyor modules for such system continues improvements related to the control of the item flow are sought. Further, continuous improvements for a safe operation for gravity-actuated roller conveyor systems are sought.

It is an object of the present invention to improve existing roller conveyor modules and methods for speed control in gravity-actuated roller conveyor systems in one or more of the above mentioned desired directions of improvement.

This objective is solved by a roller conveyor module for a gravity-actuated roller conveyor system according to claim 1 and by a method according to claim 11.

A roller conveyor module according to the invention comprises a speed control mechanism that can be switched on and of, i.e. the speed control mechanism has two operating modes, a speed control mode and a free flow mode that will be explained in more detail below.

During operation of the gravity-actuated roller conveyor system it is preferred that a roller conveyor module controls the speed of the conveyed items, i.e. brakes the items and slows their speed down in order to avoid an uncontrolled high speed movement of the conveyed items. This is particularly preferred for a roller conveyor module that is situated at the downstream end in the conveying direction of a gravity-actuated roller conveyor system where the conveyed items are transferred to another item handling or transportation system, for example a fork lifter, transtoker or another conveying system. This transfer to a further item handling or transportation system at the downstream end of a gravity-actuated roller conveyor system regularly is a discontinuous process, i.e. items are transferred to the further item handling or transportation system at certain times while at other times no transfer takes place. When no transfer takes place the conveying of the items has to be retarded or the items have to be stored at the downstream end of the gravity-actuated roller conveyor system. Therefore, it is preferred to control the conveying speed, particularly in a roller conveyor module located at the downstream end of a gravity-actuated roller conveyor system.

However, in order to speed up the transfer process and to reduce the time needed for one or several items to be transferred from a roller conveyor module at the downstream end of the gravity-actuated roller conveyor system to a further item handling or transportation system it is preferred that the items can move at a high speed on the remaining section of the conveyor line.

The roller conveyor module according to the invention has the advantage to enable a speed control mechanism to operate in a speed control mode, i.e. in an operating mode where the speed of the items is controlled directly or indirectly. In a gravity-actuated roller conveyor system speed control primarily means braking or retarding the items to be conveyed. A direct speed control directly controls the speed of items conveyed on the upper support surface of the conveyor line for conveying items in the conveying direction. An indirect speed control for example controls the speed of the conveyor rollers and thus only indirectly controls the speed of items.

Further, the speed control mechanism of the roller conveyor module according to the invention can operate in a free flow mode during times when no transfer of items takes place, i.e. in an operating mode without any speed control and thus with a high speed movement of the conveyed items. In this case, the speed of the conveyed items is only restricted by the (maximum or desired) conveying speed of any further item handling or transportation system the items are transferred to.

These two operating modes of the speed control mechanism are realized by the speed controller: in the speed control mode the speed controller is in its first, engaged position and controls the speed of conveyed items, i.e. brakes the items such that their speed does not exceed a certain desired speed. In the free flow mode the speed controller is in a second, free position and does not control the speed of the conveyed items, i.e. the items move with a speed depending on the angle of the conveying direction as well as the characteristics of the conveyed items and the conveyor line.

The switch in operation mode of the speed controller is triggered by an actuator that is coupled to the speed control mechanism via a coupling mechanism. The switch from free flow mode to speed control mode can be termed activation, the switch from speed control mode to free flow mode can be termed deactivation.

The actuator is disposed downstream from the speed control mechanism in the conveying direction and preferably located at or close the downstream end of the roller conveyor module located preferably at the downstream end of the gravity-actuated roller conveyor system. The actuator has a hold position and a trigger position and is coupled via the coupling mechanism to the speed controller of the speed control mechanism such that the trigger position of the actuator triggers the free flow mode with the speed controller in its second, free position and the hold position of the actuator triggers the activation of the speed control mode with the speed controller in its first, engaged position.

In this way, it is possible to change the operation mode of the speed control mechanism by changing the position of the actuator. For example, if if the actuator is located at the downstream end of a gravity-actuated roller conveyor system, the actuator can be moved into its trigger position by an element of the further item handling or transportation system, for example by the jack of a transtoker. In this way the actuator is only moved into its trigger position when a transfer is desired and a required vehicle of the further item handling or transportation system is present at the downstream end of the gravity-actuated roller conveyor system.

In a preferred embodiment, the actuator is biased in its hold position and has to be moved against that bias in order to reach the trigger position. This has the further advantage, that the actuator will return to the hold position and thus activate the speed control mode when no force is present that moves the actuator against the bias into the trigger position.

A preferred embodiment of the roller conveyor module is characterized in that the speed controller comprises a speed control roller being in contact with two adjacent conveyor rollers of the conveyor line in its first, engaged position.

The speed controller preferably is a speed control roller that is located such that the jacket of the speed control roller is in contact with the jackets of two adjacent rollers of the conveyor line. The friction between the speed control roller and the two adjacent conveyor rollers restricts the rotational speed of the adjacent conveyor rollers and thus indirectly restricts the speed of the conveyed items moving along the upper support surface on the conveyor line defined by the perimeter of the conveyor rollers.

A preferred embodiment of the roller conveyor module is characterized in that the speed control mechanism comprises a lever mechanism connecting the coupling mechanism with the speed controller.

Via a lever mechanism it is possible to realize different geometrical arrangements of the coupling mechanism and the location of the speed controller of the speed control mechanism.

In a further preferred embodiment a roller conveyor module is characterized in that the speed control mechanism comprises at least one resilient element, preferably at least one spring, biasing the speed controller is in its first, engaged position.

This embodiment has the advantage that the standard mode of operation is the speed control mode with speed controller in its first, engaged position. The free flow mode can only be triggered against the bias of the at least one resilient element. This improves the safety of a gravity-actuated roller conveyor system. A further advantage of the bias via at least one resilient element is that in constructions using friction as means for speed control, the friction can be improved or adjusted by intensifying of adjusting the bias of the at least one resilient element.

A preferred embodiment of the invention is characterized in that the actuator comprises an actuating lever pivotable about a pivotal point.

An embodiment with a pivotable actuating lever is particularly preferred since a pivotable actuating lever can be easily triggered, for example by the jack of a transtoker when it reaches the downstream end of a gravity-actuated roller conveyor system in order to receive items to be transferred.

A preferred embodiment of the invention is characterized in that the coupling mechanism comprises a coupling rod moveable in an engaging direction and in a disengaging direction, wherein preferably the engaging direction is opposite to the disengaging direction.

A simple and reliable coupling mechanism is a coupling rod extending along preferably at least a part of a roller conveyor module from the actuator to the speed control mechanism, Preferably the rod can be moved in two opposite directions (engaging and disengaging directions), preferably via pulling and pushing the rod. In a preferred combination, the pivotable actuating lever directly or indirectly triggers the motion of the coupling rod in the engaging or disengaging direction and the lever mechanism transfers this motion of the rod directly or indirectly into a movement of the speed controller between its first, engaged position and its second, free position.

According to the invention, the roller conveyor module is characterized by a stopping mechanism comprising a stopping element moveable between a stopping position in which the stopping element extends across the support surface and causes a conveyed item on the support surface to be stopped, and a release position in which the stopping element is located below the support surface and does not cause a conveyed item on the support surface to be stopped.

In order to further increase the safety in the operation of a gravity-actuated roller conveyor system, particularly the safety of a transfer operation from conveyed items to another item handling or transportation system, a stopping mechanism is located preferably at the downstream end of a gravity-actuated roller conveyor system in order to prevent items to be conveyed further than the end of the conveyor line at the downstream line of the gravity-actuated roller conveyor system, particularly if no transfer to a further item handling or transportation system is desired. However, in order to enable the items to be transferred and thus leave the conveyor line in a transfer situation as desired, the stopping element of the stopping mechanism can be retrieved to a release position located below the support surface and thus not interfering with the movement of the items.

According to the invention, the roller conveyor is characterized in that the stopping mechanism is coupled to the actuator such that the stopping element is its stopping in position when the actuator is in its hold position and the stopping element is in its release position when the actuator is in its trigger position.

This is particularly preferred since it couples the stopping mechanism to the same actuator the speed control mechanism is coupled to. In this way a free flow of the items can be ensured with the speed control mechanism being in its free flow mode and the stopping mechanism not preventing the items from leaving the conveyor line in its released position. This embodiment further ensures that items are prevented from leaving the conveyor line in a situation where this is not desired by stopping the items with the stopping element in the stopping position and the speed control mechanism in the speed control mode.

In a further preferred embodiment the roller conveyor module is characterized by a separation mechanism comprising a separating element moveable between a stopping position in which the separating element extends across the support surface and causes a conveyed item on the support surface to be stopped, and a release position in which the separating element is located below the support surface and does not cause a conveyed item on the support surface to be stopped.

In order to further increase the safety of the operation of a gravity-actuated roller conveyor system, particularly the safety during the transfer of items from the gravity-actuated roller conveyor system to a further item handling or transportation system, the separation mechanism is adapted to stop items from being conveyed further in the conveying direction in a location upstream of the downstream end of the gravity-actuated roller conveyor system, In this way it can be avoided that the full load of all items being conveyed on the conveyor line rests on the downstream end of the gravity-actuated roller conveyor system, for example on a stopping mechanism located there or on a vehicle receiving items from the gravity-actuated roller conveyor system. By stopping the line of items to be conveyed in a position upstream of the downstream end of the gravity-actuated roller conveyor system, the number of items between the downstream end and the separation mechanism is limited in thus the possible damage resulting from an uncontrolled high speed movement of items towards or over the downstream end of the gravity-actuated roller conveyor system is also limited. In order to take up the conveying process, the separating element of the separation mechanism can be moved from its stopping position into a release position in which the separating element does not stop the items from being conveyed on the upper support surface.

A further preferred embodiment of the roller conveyor module is characterized in that the separation mechanism is coupled to a pedal mechanism such that the separating element is moved into its stopping position when a pedal of the pedal mechanism is activated and the separating element can be moved into its release position when the pedal of the pedal mechanism is moved into a release position.

Preferably, the separation mechanism is coupled to a pedal mechanism such that the separating element can be released into its release position when the pedal mechanism is in its release position, and the separating element is in its stopping position when the pedal mechanism is in its activated position. Preferably, the pedal mechanism comprises a pedal and a locking surface.

A further preferred embodiment of the roller conveyor module is characterized in that the separation mechanism is coupled to the coupling mechanism via the pedal mechanism such that the separating element is in locked its stopping position when the actuator is in its trigger position and the pedal mechanism is locked in an activated position..

The safety of a transfer process is particularly increased when the separation mechanism is coupled to the same actuator the speed mechanism is coupled to such that the conveying of items is blocked by the separation mechanism when the actuator is in its trigger position and the speed control mechanism is in its free flow mode. In this way it is prevented that items upstream of the separation mechanism can be conveyed along the conveyor line without speed control. The pedal mechanism preferably further comprises a locking element with a locking hook and a connection element releasably connecting the pedal mechanism with the coupling mechanism. When the actuator is moved into its hold position from a previous trigger position it is preferred that the separation mechanism does not block the items from being conveyed anymore, since after a transfer of the items from the downstream end of the gravity-actuated roller conveyor system to a further item handling or processing system, the part of the roller conveyor system between separation mechanism and the downstream end is empty and needs to be refilled with items to be conveyed- Therefore, while the actuator is in its hold position and pallets are fed along the conveying direction to the end of the conveyor line, it is preferred that the pedal mechanism is in its release position, and the pedal mechanism is coupled to the separation mechanism such that the separating element can be released into its release position when a pallet moves towards and past the separation mechanism. When a pallet has completely passed the pedal mechanism in the conveying direction, pedal moves back into its released position. When the pedal mechanism is activated while the actuator is in its hold position, it is further preferred that the pedal mechanism is coupled to the separation mechanism such that a separating element is in its stopping position such that following pallets are stopped,

A further improved embodiment of the invention is characterized in that the pedal mechanism is coupled to the coupling mechanism via a connector of the coupling mechanism and a connection element of the locking element such that the pedal mechanism is locked in its activated position when the actuator is in its trigger position..

When the actuator is moved into its trigger position, it is further preferred that that the pedal mechanism is locked in its activated position and thus the separating element of the separation mechanism is locked in its stopping position. In this way, the separation mechanism prevents further pallets from being conveyed towards the end of the conveyor line when the pallets at the end of the conveyor line are transferred to the transtoker. When the actuator is moved back into its hold position, it is further preferred that the separating element can be released into its release position such that new pallets can be conveyed towards the end of the conveyor line. This coupling of the separating mechanism to the activator via the coupling mechanism and the pedal mechanism further Increases the safety of a gravity-actuated roller conveyor system, particularly during the transfer of conveyed items to another item handling or transportation system at the downstream end of a gravity-actuated roller conveyor system.

According to the invention the roller conveyor module is characterized by two, three or several speed control mechanisms, each comprising a speed controller moveable between a first, engaged position to control the speed of conveyed items and a second, free position with the speed of conveyed items not controlled by the speed controller; the coupling mechanism coupling the actuator with the two, three or several speed control mechanisms such that each of the speed controllers is in its first, engaged position when the actuator is in Its hold position and each of the speed controllers is in its second, free position when the actuator is in its trigger position.

Depending on the number and weight of the conveyed items to be retarded by the roller conveyor module it can be advantageous to provide for more than one speed control mechanism. It is preferred that the two, three or more speed control mechanisms are of the same type and actuated or deactivated, respectively, via the same single actuator.

In a further preferred embodiment, the roller conveyor module is characterized in that the two, three or several speed control mechanisms each are coupled to the actuator via the same coupling rod.

In a particularly advantageous construction the two, three or more speed control mechanisms are activated or deactivated, respectively, by the same coupling rod connecting each of the speed control mechanisms to the same single actuator.

According to a further aspect of the invention, it is provided a method for speed control in a gravity-actuated roller conveyor system according to claim 11.

As to the advantages, possible preferred embodiments in details of this method, reference is made to the corresponding aspects and embodiments described above for the roller conveyor module.

A preferred embodiment of the invention shall now be described with reference to the attached drawings, in which:
- Fig 1:: is a lateral view of a roller conveyor module at the downstream end of a gravity-actuated roller conveyor system with an adjacent conveyor of a further item handling or transportation system in a situation where pallets are conveyed towards the end of the conveyor line,
- Fig 2:: the roller conveyor module of figure 1 in a situation where pallets are stopped from being conveyed towards the end of the conveyor line,
- Fig 3:: the roller conveyor module of figure 1 in a situation where pallets are transferred to the adjacent conveyor of a further item handling or transportation system,
- Fig. 4:: an enlarged view of detail I of the roller conveyor module according to figure 1,
- Fig. 5:: an enlarged view of detail II of a speed control mechanism of the roller conveyor module according to figure 1 in its first, engaged position,
- Fig. 6:: an enlarged view of detail III of the roller conveyor module according to figure 3,
- Fig. 7:: the speed control mechanism according to figure 5 in its second, free position,
- Fig. 8:: an enlarged view of detail A of the roller conveyor module according to figure 1,
- Fig. 9:: an enlarged view of detail B of the roller conveyor module according to figure 2, and
- Fig. 10:: an enlarged view of detail C of the roller conveyor module according to figure 3.

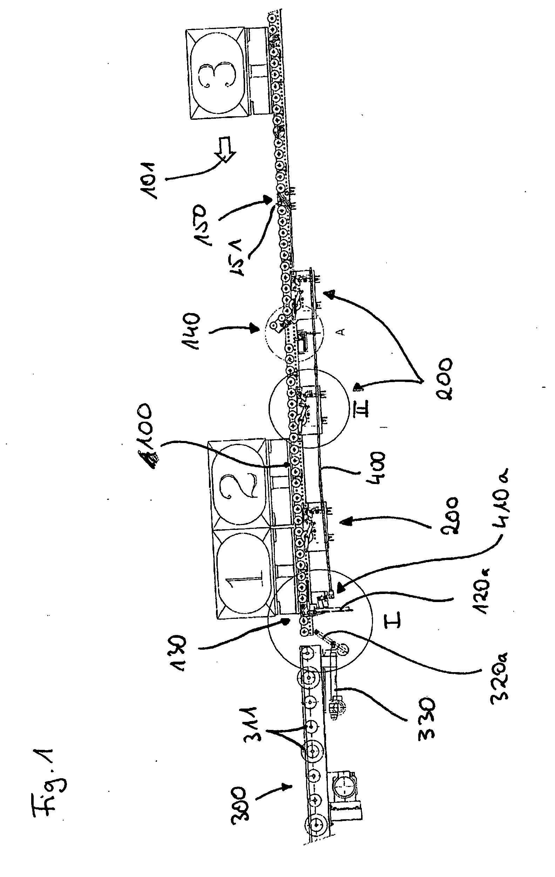

Figures 1-3 depict a roller conveyor module at the downstream end of the gravity-actuated roller conveyor system comprising a conveyor line consisting of a plurality of conveyor rollers 111 arranged one behind the other. The outer perimeter of the conveyor rollers forms an upper support surface 100 for conveying items 1, 2, 3, 4, 5, 6 in a conveying direction 101. The conveying items 1, 2, 3, 4, 5, 6 depicted in figures 1, 2, 3 are pallets; other conveying items may be containers, boxes or the like. The conveying direction 101 is slightly inclined downwards in order to enable a gravity-actuated conveying of the items. The roller conveyor module according to figures 1, 2, 3 comprises three speed control mechanisms 200 each comprising a speed controller 210.

In figures 1, 2, 3 further a conveyor 300 of a transtoker as a further item handling or transportation system is depicted to receive items 1, 2, 3, 4 from the conveyor line. Conveyor 300 of the transtoker also comprises a plurality of rollers 311. The transtoker conveyor further comprises a lever 320 that can be moved from a first position 320a into a second position 320b by activating a hydraulic cylinder 330. With the lever 320 in its second position 320b, a driver of the transtoker can trigger the actuator 120 and therefore trigger different modes of the speed control systems 200, the stopping mechanism 130 and the separation mechanism 150 as described below.

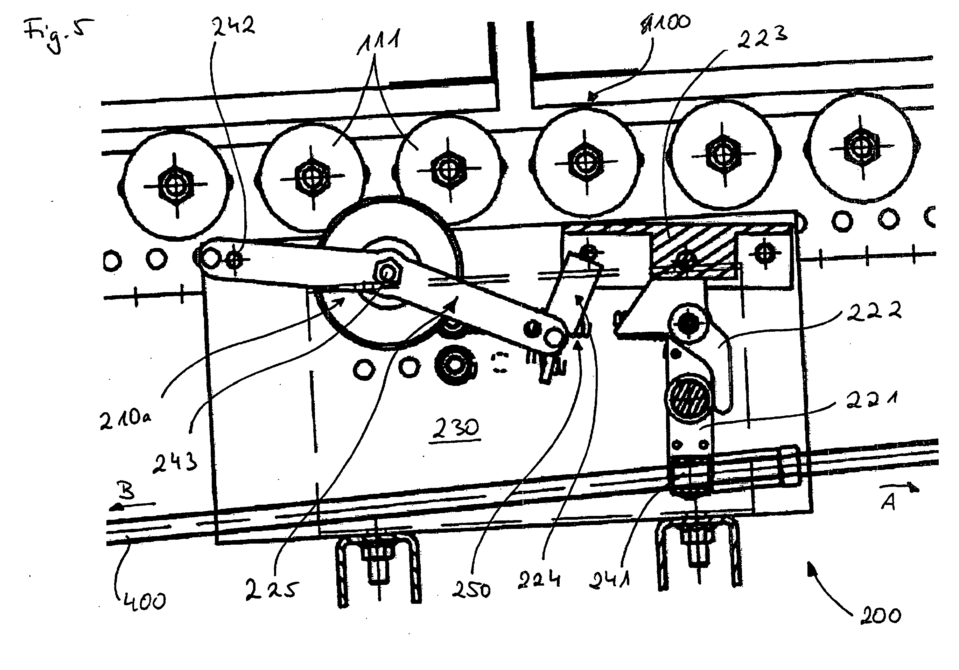

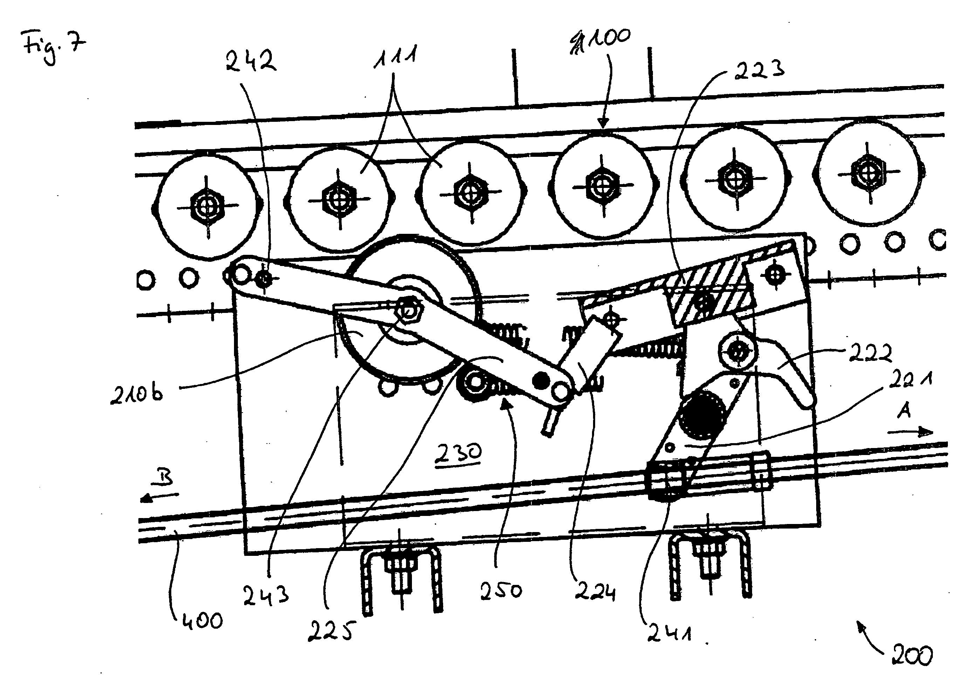

Each of the three speed control mechanisms 200 comprises a speed control roller 210 as a speed controller. The speed control roller is movable between a first, engaged position shown in figure 5 and a second, free position 210b shown in figure 7. In the first, engaged position 210a of the speed controller as shown in figure 5 the jacket of the speed control roller is in contact with two adjacent conveyor rollers 111 of the conveyor line. The speed control roller 210 is biased against the two adjacent conveyor rollers 111 by two springs 250 and retards the rotational movement of those adjacent conveyor rollers 111 by friction. The speed control roller 210 is connected via a lever mechanism 221, 222, 223, 224, 225 to the rod 400 serving as a coupling mechanism between the actuator 120 and the speed control mechanisms 200. The rod 400 is connected to lever 221 of the lever mechanism at point 241. Lever 225 of the lever mechanism is connected to a base plate 230 of the speed control mechanism 200 at point 242 and to the speed control roller 210 at point 243.

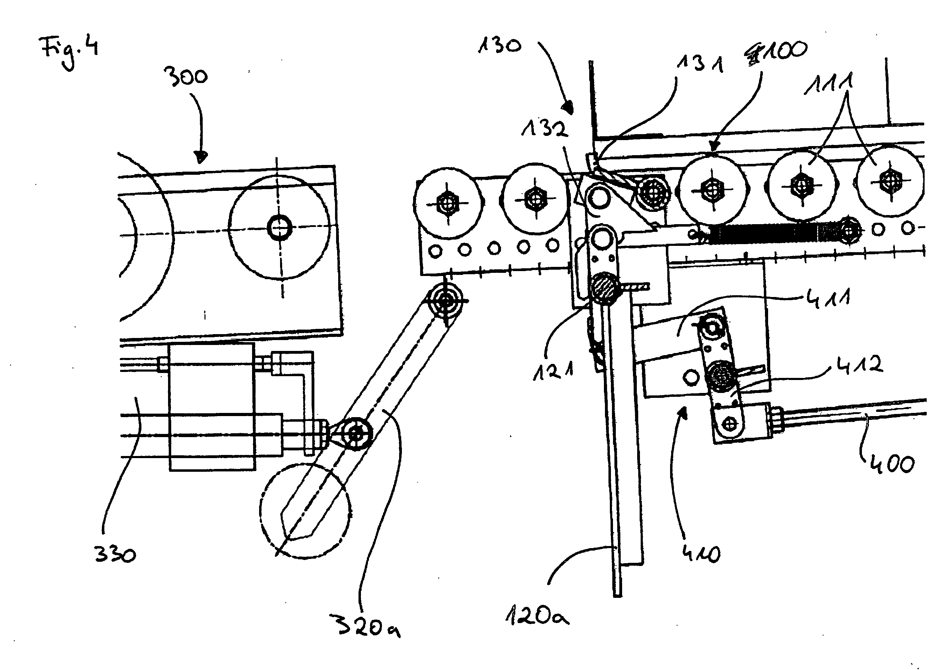

As can be seen from a comparison of figures 5 and 7, the speed controller 210 can be moved from a first, engaged position 200a depicted in figure 5 to the second, free position 200b depicted in figure 7 by a movement of rod 400 in a disengaging direction B. Vice versa, the speed controller 210 can be moved from its second, free position 210b depicted in figure 4 into its first, engaged position 210a, depicted in figure 5, by a movement of rod 400 in the engaging direction A.

The lever mechanism 221, 222, 223, 224, 225 transfers the movement of the rod 400 along the directions A, B into a movement of the speed control roller 210 between its first engaging position 210a and its second, free position 210b. In moving the speed control roller 210 from its first engaging position 210a into its second, free position 210 b, the movement of the rod 400 has to overcome the biasing force of springs 250.

Rod 400 is coupled to the actuator 120. The actuator in the embodiment depicted in figures 1, 2, 3 is an actuating lever 120 pivotal about pivotable point 121. This construction of the actuator is particularly preferred in combination with a lever 320 of a transtoker for example.

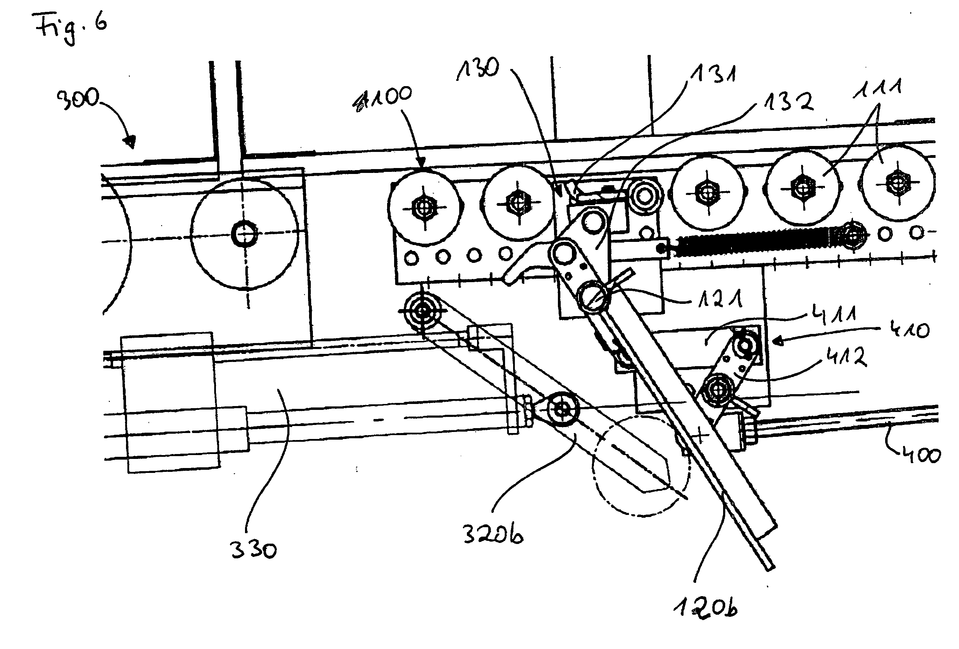

By moving the actuator 120 from its hold position 120a (depicted in figure 4) to its trigger position 120b (depicted in figure 6) with lever 320 of the transtoker, the speed control mechanisms 200 can be switched from speed control mode to free flow mode.

With the speed control mechanisms 200 in the speed control mode, i.e. with a speed controller in its first, engaged position, items 1, 2, 3, 4 are retarded and move with a lowest speed than with the speed control mechanism 200 in the free flow mode, i.e. with the speed controller not controlling the speed of the items. The speed control of the items can be direct or indirect. The speed control of the speed control mechanisms 200 depicted in figures -1, 2, 3, 5, 7 is an indirect speed control, since speed control roller 210 directly controls the speed of conveyor rollers 111 and thus only indirectly controls the speed of items 1, 2, 3, 4.

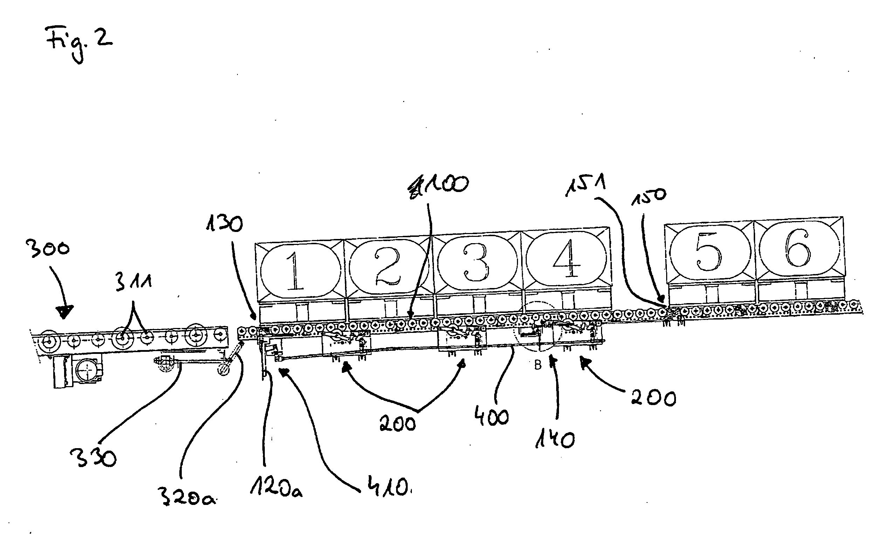

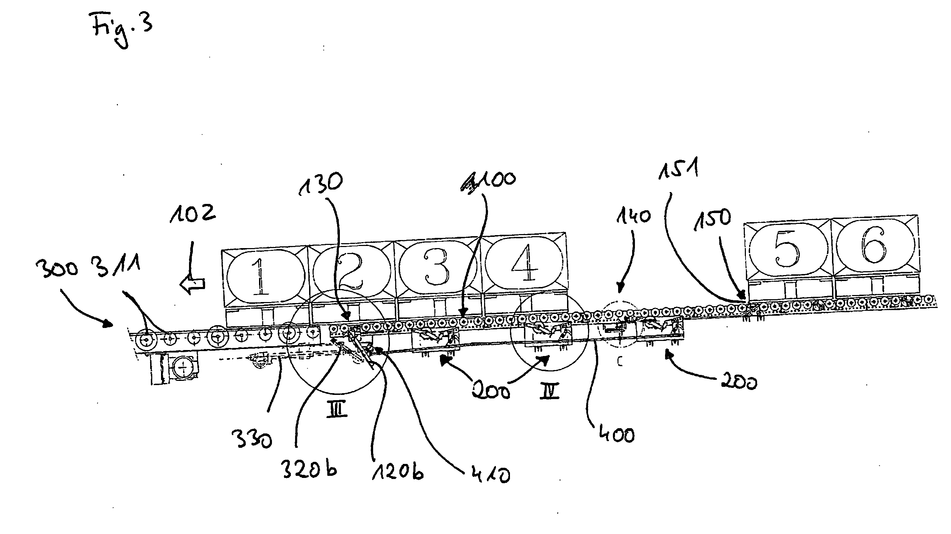

The safety of the roller conveyor module for the gravity-actuated roller conveyor system according to figure 1 is further improved in that a stopping mechanism 130 and a separation mechanism 150 are provided. The stopping mechanism 130 comprises a stopping element 131 that is moveable between a stopping position and a release position. In the stooping position the stopping element 131 extends across the support surface 100 as depicted in figure 1 and 2 and causes the conveyed item 1 on the support surface 100 to be stopped. In the release position depicted in figures 3, 6 the stopping element 131 is located below the support surface 100 and does not cause a conveyed item on the support surface 100 to be stopped. The stopping mechanism 130 is coupled to the actuator 120 such that the stopping element 131 is in its stopping position when the actuator 120 is in its hold position 120a and the stopping element 131 is in its released position when the actuator 120 is in its trigger position 120b.

The separation mechanism 150 comprises a separating element 151 movable between a stopping position and a release position. In the stopping position the separating element 151 extends across the support surface 100 and causes a conveyed item 5 on the support surface 100 to be stopped. In the released position the separating element 151 can be located below the support surface 100 and then does not cause an conveyed item on the support surface 100 to be stopped.

Preferably, the separation mechanism 150 is coupled to the coupling mechanism 400 via a pedal mechanism 140 such that the separating element 151 can be released into its release position when the pedal mechanism 140 is in its release position, and the separating element 151 is in its stopping position when the pedal mechanism 140 is in its activated position.

The pedal mechanism 140 comprises a pedal 140a with rollers 144 and a locking surface 145. The pedal mechanism 140 further comprises a locking element 140b with a locking hook 141 and a connection element 142 releasably connecting the pedal mechanism 140 with the coupling mechanism 400.

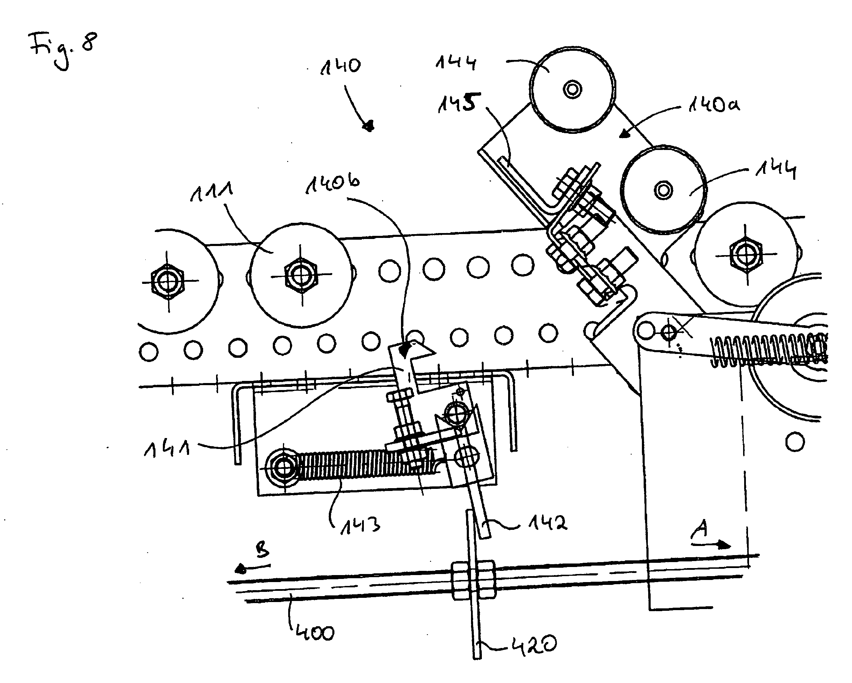

While the actuator 120 is in its hold position 120a and pallets are fed along the conveying direction to the end of the conveyor line as can be seen from figure 8, connector 420 is pulled in direction A by the rod 400 and moves connection element 142 of the locking element 140b against spring 143 such that the locking hook 141 is in the release position. In this release position of the pedal mechanism 140, the pedal 140a extends across the support surface (100), and the pedal mechanism 140 is coupled to the separation mechanism 150 such that the separating element 151 can be released into its release position when a pallet (pallet 3 in figure 1) moves towards and past the separation mechanism 150. When pallet 3 has completely passed the pedal mechanism 140 in the conveying direction, pedal 140a moves back into its released position.

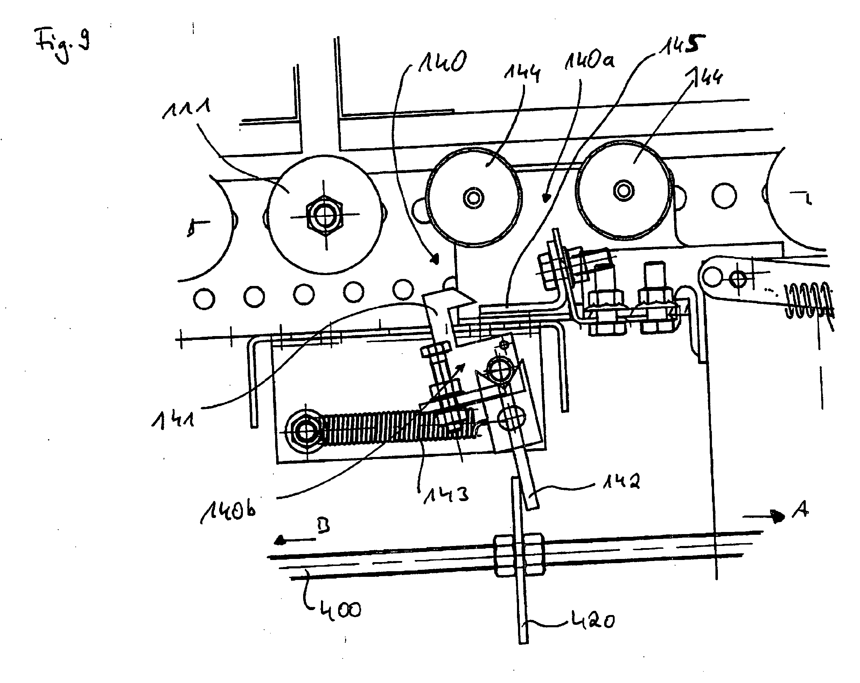

When the pedal 140a is activated, i.e. pushed down below the support surface 100, by pallet 4 as can be seen from figure 2 and 9 while the actuator 120 is in its hold position 120a, the pedal mechanism 140 is coupled to the separation mechanism 150 such that the separating element 151 is in its stopping position extending across the support surface (100), such that following pallets 5, 6 are stopped,

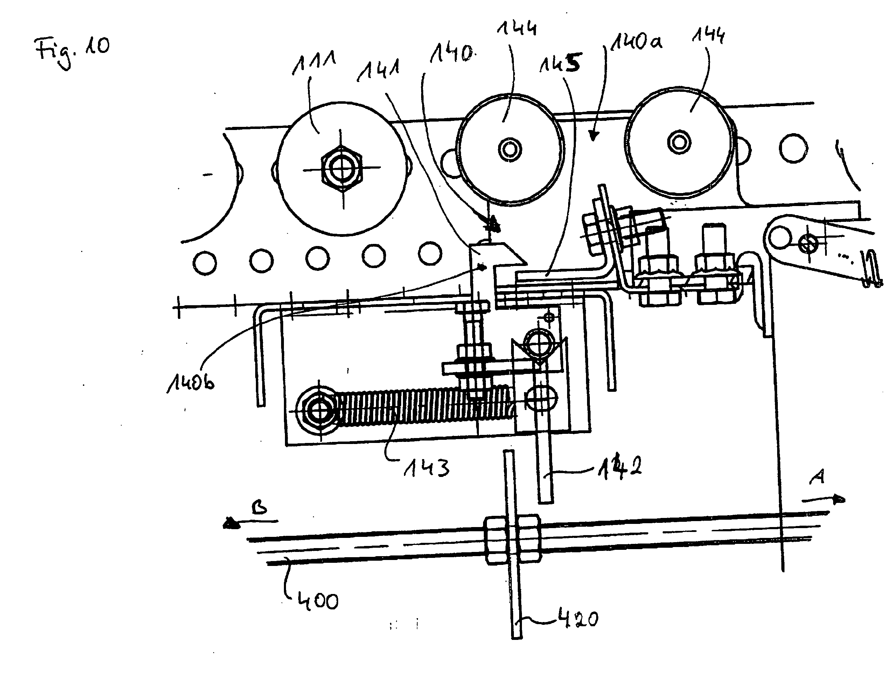

When the actuator 120 is moved into its trigger position 120b by lever 320 of the transtoker, connector 420 is pulled by the rod 400 in direction B and releases connection element 142 of the locking element 140b so that spring 143 moves the locking hook 141 in a locking position depicted in figure 10, where the locking hook 143 engages the locking surface 145 of the pedal 140a such that the pedal 140a is locked in its activated position and thus the separating element 151 of the separation mechanism 150 is locked in its stopping position. In this way, the separation mechanism 150 prevents pallets 5, 6 from being conveyed towards the end of the conveyor line when the pallets 1, 2, 3, 4 are transferred to the transtoker. When lever 320 of the transtoker is moved away from the end of the conveyor line and actuator 120 is moved back into its hold position 120a, connector 420 is pulled in direction A by rod 400 and moves connection element 142 of the locking element 140b against spring 143 such that the locking hook 141 is in the release position and the separating element 151 can be released into its release position such that new pallets can be conveyed towards the end of the conveyor line.

This coupling of the separating mechanism (150) to the activator 120 via the coupling mechanism 400 and the pedal mechanism 140 further increases the safety of a gravity-actuated roller conveyor system, particularly during the transfer of conveyed items to another item handling or transportation system at the downstream end of a gravity-actuated roller conveyor system.

## Claims

1. A roller conveyor module for a gravity-actuated roller conveyor system, comprising:
- a conveyor line consisting of a plurality of conveyor rollers (111) arranged one behind the other, said conveyor line forming an upper support surface (100) for conveying items (1, 2, 3, 4) in a conveying direction (101) and defined by the perimeter of the conveyor rollers;
- a speed control mechanism (200) with a speed controller (210) moveable between a first, engaged position (210a) to control the speed of conveyed items (1, 2, 3, 4) and a second, free position (210b) with the speed of conveyed items (1, 2, 3, 4) not controlled by the speed controller (210);
- an actuator (120) disposed downstream from the speed control mechanism (200) in the conveying direction (101) of the conveyor module; the actuator (120) being moveable between a hold position (120a) and a trigger position (120b);
- a coupling mechanism (400) coupling the actuator (120) with the speed control mechanism (200) such that the speed controller (210) is in the first, engaged position (210a) when the actuator (120) is in its hold position (120a) and the speed controller is in the second, free position (210b) when the actuator (120) is in its trigger position (120b);
wherein the speed controller comprises a speed control roller (210) being in contact with two adjacent conveyor rollers (111) of the conveyor line in its first, engaged position (210a),
**characterized in that** two, three or more speed control mechanisms (200) are provided, and **in that** the coupling mechanism (400) couples the actuator (120) with the two, three or more speed control mechanisms (200),
wherein a stopping mechanism (130) comprises a stopping element (131) moveable between a stopping position in which the stopping element (131) extends across the support surface (100) and causes a conveyed item (1) on the support surface to be stopped, and a release position in which the stopping element (131) is located below the support surface and does not cause a conveyed item on the support surface to be stopped, and
wherein the stopping mechanism (130) is coupled to the actuator (120) such that the stopping element (131) is in its stopping position when the actuator (120) is in its hold position (120a) and the stopping element (131) is in its release position when the actuator (120) is in its trigger position (120b).

2. The roller conveyor module of the preceding claim,
**characterized in that** the speed control mechanism (200) comprises a lever mechanism (221, 222, 223, 224, 225) connecting the coupling mechanism (400) with the speed controller (210).

3. The roller conveyor module of any of the preceding claims,
**characterized in that** the speed control mechanism (200) comprises at least one resilient element (250), preferably at least one spring, biasing the speed controller (210) in its first, engaged position (210a).

4. The roller conveyor module of any of the preceding claims,
**characterized in that** the actuator (120) comprises an actuating lever pivotable about a pivotal point (121).

5. The roller conveyor module of any of the preceding claims,
**characterized in that** the coupling mechanism (400) comprises a coupling rod moveable in an engaging direction (A) and in a disengaging direction (B), wherein preferably the engaging direction is opposite to the disengaging direction.

6. The roller conveyor module of any of the preceding claims,
**characterized by** a separation mechanism (150) comprising a separating element (151) moveable between a stopping position in which the separating element (151) extends across the support surface (100) and causes a conveyed item (5) on the support surface to be stopped, and a release position in which the separating element (151) is located below the support surface and does not cause a conveyed item on the support surface to be stopped.

7. The roller conveyor module of the preceding claim,
**characterized in that** the separation mechanism (150) is coupled to a pedal mechanism (140) such that the separating element (151) is moved into its stopping position when a pedal (140a) of the pedal mechanism (140) is activated and the separating element (151) can be moved into its release position when the pedal (140a) of the pedal mechanism (140) is moved into a release position.

8. The roller conveyor module of the preceding claim,
**characterized in that** the separation mechanism (150) is coupled to the coupling mechanism (400) via the pedal mechanism (140) such that the separating element (151) is in locked its stopping position when the actuator (120) is in its trigger position (120b) and the pedal mechanism (140) is locked in an activated position.

9. The roller conveyor module of one of the two preceding claims,
**characterized in that** the pedal mechanism (140) is coupled to the coupling mechanism (400) via a connector (420) of the coupling mechanism (400) and a connection element (142) of the locking element (140b) such that the pedal mechanism is locked in its activated position when the actuator (120) is in its trigger position (120b).

10. The roller conveyor module of any of the preceding claims,
**characterized in that** the two, three or several speed control mechanisms (200) each are coupled to the actuator (120) via the same coupling rod.

11. A method for speed control in a gravity-actuated roller conveyor system, comprising the steps:
- conveying items (1, 2, 3, 4) in a conveying direction (101) on an upper support surface (100) defined by the perimeter of a plurality of conveyor rollers (111) of a conveyor line arranged one behind the other;
- controlling the speed of the conveyed items by a speed control mechanism (200) comprising a speed controller (210) in a first, engaged position (210a) while an actuator (120) disposed downstream from the speed control mechanism (200) in the conveying direction (101) and coupled to the speed control mechanism (200) via a coupling mechanism (400) is in a hold position (120b);
- ceasing to control the speed of the conveyed items by moving the speed controllers (210) into a second, free position (210b) when the actuator (120) is moved into a trigger position (120b);
- the speed controller comprising a speed control roller (210) being in contact with two adjacent conveyor rollers (111) of the conveyor line in its first, engaged position (210a), **characterized in that** the speed is controlled by two, three or more speed control mechanisms (200) coupled to the actuator (120) by the coupling mechanism (400)
- and wherein a stopping mechanism (130) comprises a stopping element (131) moveable between a stopping position in which the stopping element (131) extends across the support surface (100) and causes a conveyed item (1) on the support surface to be stopped, and a release position in which the stopping element (131) is located below the support surface and does not cause a conveyed item on the support surface to be stopped,
- wherein the stopping mechanism (130) is coupled to the actuator (120) such that the stopping element (131) is in its stopping in position when the actuator (120) is in its hold position (120a) and the stopping element (131) is in its release position when the actuator (120) is in its trigger position (120b),

## Patentansprüche

1. Förderrollenmodul für ein schwerkraftbetätigtes Förderrollensystem, umfassend:
- eine Förderstrecke, bestehend aus einer Mehrzahl an hintereinander angeordneten Förderrollen (111), wobei die Förderstrecke eine obere Auflagefläche (100) formt, um Gegenstände (1, 2, 3, 4, 5) in einer Förderrichtung (101) zu fördern, und die durch den Umfang der Förderrollen definiert ist;
- einen Geschwindigkeitssteuermechanismus (200) mit einem Geschwindigkeitssteuerer (210), welcher zwischen einer ersten, im Eingriff befindlichen Position (210a), zum Steuern der Geschwindigkeit geförderter Gegenstände, und einer zweiten, freien Position (210b), in der die Geschwindigkeit geförderter Gegenstände (1, 2, 3, 4, 5) nicht vom Geschwindigkeitssteuerer (210) gesteuert ist, beweglich ist;
- ein Betätigungsglied (120), das stromabwärts des Geschwindigkeitssteuermechanismus (200) in Förderrichtung (101) des Fördermoduls angeordnet ist; wobei das Betätigungsglied (120) zwischen einer Halteposition (120a) und einer Auslöseposition (120b) beweglich ist;
- einen Kopplungsmechanismus (400), der das Betätigungsglied (120) mit dem Geschwindigkeitssteuermechanismus (200) koppelt, sodass sich der Geschwindigkeitssteuerer (210) in der ersten, im Eingriff befindlichen Position (210a) befindet, wenn sich das Betätigungsglied (120) in der Halteposition (120a) befindet und sich der Geschwindigkeitssteuerer (210) in der zweiten, freien Position (210b) befindet, wenn sich das Betätigungsglied (120) in der Auslöseposition (120b) befindet;
wobei der Geschwindigkeitssteuerer eine Geschwindigkeitssteuerrolle (210) umfasst, welche sich in der ersten, im Eingriff befindlichen Position (210a) in Kontakt mit zwei benachbarten Förderrollen (111) der Förderstrecke befindet,
**dadurch gekennzeichnet, dass** zwei, drei oder mehr Geschwindigkeitssteuermechanismen (200) bereitgestellt sind und dass der Kopplungsmechanismus (400) das Betätigungsglied (120) mit den zwei, drei oder mehr Geschwindigkeitssteuermechanismen (200) koppelt,
wobei ein Stoppmechanismus (130) ein Stoppelement (131) umfasst, welches zwischen einer Stoppposition und einer Löseposition beweglich ist, wobei sich das Stoppelement (131) in der Stoppposition über die Auflagefläche (100) erstreckt und einen geförderten Gegenstand (1) auf der Auflagefläche zum Stoppen bringt und das Stoppelement (131) in der Löseposition unterhalb der Auflagefläche angeordnet ist und einen geförderten Gegenstand auf der Auflagefläche nicht zum stoppen bringt, und
wobei der Stoppmechanismus (130) mit dem Betätigungsglied (120) gekoppelt ist, sodass sich das Stoppelement (131) in seiner Stoppposition befindet, wenn sich das Betätigungsglied (120) in seiner Halteposition (120a) befindet und sich das Stoppelement (131) in seiner Löseposition befindet, wenn sich das Betätigungsglied (120) in seiner Auslöseposition (120b) befindet.

2. Förderrollenmodul nach dem vorhergehenden Anspruch,
**dadurch gekennzeichnet, dass** der Geschwindigkeitssteuermechanismus (200) einen Hebelmechanismus (221, 222, 223, 224, 225) umfasst, welcher den Kopplungsmechanismus (400) mit dem Geschwindigkeitssteuerer (210) verbindet.

3. Förderrollenmodul nach einem der vorhergehenden Ansprüche,
**dadurch gekennzeichnet, dass** der Geschwindigkeitssteuermechanismus (200) mindestens ein elastisches Element (250) umfasst, vorzugsweise mindestens eine Feder, die den Geschwindigkeitssteuerer (210) in seiner ersten, im Eingriff befindlichen Position (210a) vorspannt.

4. Förderrollenmodul nach einem der vorhergehenden Ansprüche,
**dadurch gekennzeichnet, dass** das Betätigungsglied (120) einen Betätigungshebel umfasst, welcher drehbar um einen Drehpunkt (121) angeordnet ist.

5. Förderrollenmodul nach einem der vorhergehenden Ansprüche,
**dadurch gekennzeichnet, dass** der Kopplungsmechanismus (400) einen Kopplungsstab umfasst, welcher in eine Eingriffsrichtung (A) und in eine Löserichtung (B) beweglich ist, wobei vorzugsweise die Eingriffsrichtung entgegensetzt zu der Löserichtung liegt.

6. Förderrollenmodul nach einem der vorhergehenden Ansprüche,
**gekennzeichnet durch** einen Trennmechanismus (150), umfassend ein Trennelement (151), welches zwischen einer Stoppposition und einer Löseposition beweglich ist, wobei sich das Trennelement (151) in der Stoppposition über die Auflagefläche (100) erstreckt und einen geförderten Gegenstand (5) auf der Auflagefläche zum Stoppen bringt und das Trennelement (151) in der Löseposition unterhalb der Auflagefläche angeordnet ist und einen Fördergegenstand auf der Auflagefläche nicht zum stoppen bringt.

7. Förderrollenmodul nach dem vorhergehenden Anspruch,
**dadurch gekennzeichnet, dass** der Trennmechanismus (150) mit einem Pedalmechanismus (140) gekoppelt ist, sodass das Trennelement (151) in seine Stoppposition bewegt wird, wenn ein Pedal (140a) des Pedalmechanismus (140) aktiviert wird und das Trennelement (151) in seine Löseposition gebracht werden kann, wenn das Pedal (140a) des Pedalmechanismus (140) in eine Löseposition bewegt wird.

8. Förderrollenmodul nach dem vorhergehenden Anspruch,
**dadurch gekennzeichnet, dass** der Trennmechanismus (150) durch den Pedalmechanismus (140) mit dem Kopplungsmechanismus (400) gekoppelt ist, sodass das Trennelement (151) in seiner Stoppposition arretiert ist, wenn sich das Betätigungsglied (120) in seiner Auslöseposition (120b) befindet, und der Pedalmechanismus (140) in einer aktivierten Position arretiert ist.

9. Förderrollenmodul nach einem der beiden vorhergehenden Ansprüche, **dadurch gekennzeichnet, dass** der Pedalmechanismus (140) durch ein Verbindungsglied (420) des Kopplungsmechanismus (400) und ein Verbindungselement (142) des Arretierelements (140b) mit dem Kopplungsmechanismus (400) gekoppelt ist, sodass der Pedalmechanismus in seiner aktivierten Position arretiert ist, wenn sich das Betätigungsglied (120) in seiner Auslöseposition (120b) befindet.

10. Förderrollenmodul nach einem der vorhergehenden Ansprüche,
**dadurch gekennzeichnet, dass** die zwei, drei oder mehr Geschwindigkeitssteuermechanismen (200) jeweils durch denselben Kopplungsstab mit dem Betätigungsglied (120) gekoppelt sind.

11. Verfahren zur Geschwindigkeitssteuerung in einem schwerkraftbetätigten Förderrollensystem, umfassend die Schritte:
- Fördern von Gegenständen (1, 2, 3, 4, 5) in einer Förderrichtung (101) auf einer oberen Auflagefläche (100), welche durch den Umfang einer Mehrzahl an Förderrollen (111) definiert ist, welche hintereinander angeordnet sind;
- Steuern der Geschwindigkeit der geförderten Gegenstände durch einen Geschwindigkeitssteuermechanismus (200), umfassend einen Geschwindigkeitssteuerer (210) in einer ersten, im Eingriff befindlichen Position (210a) während sich ein Betätigungsglied (120) in einer Halteposition (120b) befindet, wobei das Betätigungsglied (120) in Förderrichtung (101) stromabwärts des Geschwindigkeitssteuermechanismus (200) angeordnet ist und mit dem Geschwindigkeitssteuermechanismus (200) durch einen Kopplungsmechanismus (400) gekoppelt ist;
- Unterbrechen der Geschwindigkeitssteuerung der geförderten Gegenstände durch Bewegen des Geschwindigkeitssteuerers (210) in eine zweite, freie Position (210b), wenn das Betätigungsglied (120) in eine Auslöseposition (120b) bewegt wird;
- wobei der Geschwindigkeitssteuerer eine Geschwindigkeitssteuerrolle (210) umfasst, welche sich in der ersten, im Eingriff befindlichen Position (210a) in Kontakt mit zwei benachbarten Förderrollen (111) der Förderstrecke befindet, **dadurch gekennzeichnet,**
**dass** die Geschwindigkeit durch zwei, drei oder mehr Geschwindigkeitssteuermechanismen (200) gesteuert wird, welche durch den Kopplungsmechanismus (400) mit dem Betätigungsglied (120) gekoppelt sind,
- und wobei ein Stoppmechanismus (130) ein Stoppelement (131) umfasst, welches zwischen einer Stoppposition und einer Löseposition beweglich ist, wobei sich das Stoppelement (131) in der Stoppposition über die Auflagefläche (100) erstreckt und einen geförderten Gegenstand (1) auf der Auflagefläche zum Stoppen bringt und das Stoppelement (131) in der Löseposition unterhalb der Auflagefläche angeordnet ist und einen geförderten Gegenstand auf der Auflagefläche nicht zum stoppen bringt,
- wobei der Stoppmechanismus (130) mit dem Betätigungsglied (120) gekoppelt ist, sodass sich das Stoppelement (131) in seiner Stoppposition befindet, wenn sich das Betätigungsglied (120) in seiner Halteposition (120a) befindet und sich das Stoppelement (131) in seiner Löseposition befindet, wenn sich das Betätigungsglied (120) in seiner Auslöseposition (120b) befindet.

## Revendications

1. Module de convoyeur à rouleaux pour un système de convoyeur à rouleaux actionné par gravité, comprenant :
- une ligne de convoyeur consistant en une pluralité de rouleaux de convoyeur (111) agencés les uns derrière les autres, ladite ligne de convoyeur formant une surface de support supérieure (100) pour acheminer des articles (1, 2, 3, 4) dans une direction d'acheminement (101) et définie par le périmètre des rouleaux de convoyeur ;
- un mécanisme de régulation de vitesse (200) avec un régulateur de vitesse (210) mobile entre une première position engagée (210a) pour réguler la vitesse des articles acheminés (1, 2, 3, 4) et une seconde position libre (210b) avec la vitesse des articles acheminés (1, 2, 3, 4) non régulée par le régulateur de vitesse (210) ;
- un actionneur (120) disposé en aval du mécanisme de régulation de vitesse (200) dans la direction d'acheminement (101) du module de convoyeur ; l'actionneur (120) étant mobile entre une position de maintien (120a) et une position de déclenchement (120b) ;
- un mécanisme de couplage (400) couplant l'actionneur (120) avec le mécanisme de régulation de vitesse (200) de sorte que le régulateur de vitesse (210) soit dans la première position engagée (210a) lorsque l'actionneur (120) est dans sa position de maintien (120a) et que le régulateur de vitesse soit dans la seconde position libre (210b) lorsque l'actionneur (120) est dans sa position de déclenchement (120b) ; dans lequel le régulateur de vitesse comprend un rouleau de régulation de vitesse (210) qui est en contact avec deux rouleaux de convoyeur (111) adjacents de la ligne de convoyeur dans sa première position engagée (210a),
**caractérisé en ce que** deux, trois ou plus mécanismes de régulation de vitesse (200) sont prévus, et **en ce que** le mécanisme de couplage (400) couple l'actionneur (120) avec les deux, trois ou plus mécanismes de régulation de vitesse (200)
dans lequel un mécanisme d'arrêt (130) comprend un élément d'arrêt (131) mobile entre une position d'arrêt dans laquelle l'élément d'arrêt (131) s'étend à travers la surface de support (100) et amène un article acheminé (1) sur la surface de support à être arrêté, et une position de libération dans laquelle l'élément d'arrêt (131) est situé en dessous de la surface de support et n'amène pas un article acheminé sur la surface de support à être arrêté, et
dans lequel le mécanisme d'arrêt (130) est couplé à l'actionneur (120) de sorte que l'élément d'arrêt (131) soit dans sa position d'arrêt lorsque l'actionneur (120) est dans sa position de maintien (120a) et que l'élément d'arrêt (131) soit dans sa position de libération lorsque l'actionneur (120) est dans sa position de déclenchement (120b).

2. Module de convoyeur à rouleaux selon la revendication précédente,
**caractérisé en ce que** le mécanisme de régulation de vitesse (200) comprend un mécanisme de levier (221, 222, 223, 224, 225) raccordant le mécanisme de couplage (400) avec le régulateur de vitesse (210).

3. Module de convoyeur à rouleaux selon l'une quelconque des revendications précédentes,
**caractérisé en ce que** le mécanisme de régulation de vitesse (200) comprend au moins un élément résilient (250), de préférence au moins un ressort, sollicitant le régulateur de vitesse (210) dans sa première position engagée (210a).

4. Module de convoyeur à rouleaux selon l'une quelconque des revendications précédentes,
**caractérisé en ce que** l'actionneur (120) comprend un levier d'actionnement pivotable autour d'un point de pivot (121).

5. Module de convoyeur à rouleaux selon l'une quelconque des revendications précédentes,
**caractérisé en ce que** le mécanisme de couplage (400) comprend une tige de couplage mobile dans une direction d'engagement (A) et dans une direction de désengagement (B), dans lequel de préférence la direction d'engagement est opposée à la direction de désengagement.

6. Module de convoyeur à rouleaux selon l'une quelconque des revendications précédentes,
**caractérisé par** un mécanisme de séparation (150) comprenant un élément de séparation (151) mobile entre une position d'arrêt dans laquelle l'élément de séparation (151) s'étend à travers la surface de support (100) et amène un article acheminé (5) sur la surface de support à être arrêté, et une position de libération dans laquelle l'élément de séparation (151) est situé en dessous de la surface de support et n'amène pas un article acheminé sur la surface de support à être arrêté.

7. Module de convoyeur à rouleaux selon la revendication précédente,
**caractérisé en ce que** le mécanisme de séparation (150) est couplé à un mécanisme de pédale (140) de sorte que l'élément de séparation (151) soit déplacé dans sa position d'arrêt lorsqu'une pédale (140a) du mécanisme de pédale (140) est activée et que l'élément de séparation (151) puisse être déplacé dans sa position de libération lorsque la pédale (140a) du mécanisme de pédale est déplacée dans sa position de libération.

8. Module de convoyeur à rouleaux selon la revendication précédente,
**caractérisé en ce que** le mécanisme de séparation (150) est couplé au mécanisme de couplage (400) via le mécanisme de pédale (140) de sorte que l'élément de séparation (151) soit bloqué dans sa position d'arrêt lorsque l'actionneur (120) est dans sa position de déclenchement (120b) et que le mécanisme de pédale (140) soit bloqué dans une position activée.

9. Module de convoyeur à rouleaux selon l'une des deux revendications précédentes,
**caractérisé en ce que** le mécanisme de pédale (140) est couplé au mécanisme de couplage (400) via un raccord (420) du mécanisme de couplage (400) et un élément de raccordement (142) de l'élément de blocage (140b) de sorte que le mécanisme de pédale soit bloqué dans sa position activée lorsque l'actionneur (120) est dans sa position de déclenchement (120b).

10. Module de convoyeur à rouleaux selon l'une quelconque des revendications précédentes,
**caractérisé en ce que** les deux, trois ou plusieurs mécanismes de régulation de vitesse (200) sont chacun couplés à l'actionneur (120) via la même tige de couplage.

11. Procédé de régulation de vitesse dans un système de convoyeur à rouleaux actionné par gravité, comprenant les étapes :
- d'acheminement d'articles (1, 2, 3, 4) dans une direction d'acheminement (101) sur une surface de support supérieure (100) définie par le périmètre d'une pluralité de rouleaux de convoyeur (111) d'une ligne de convoyeur agencés les uns derrière les autres ;
- de régulation de la vitesse des articles acheminés par un mécanisme de régulation de vitesse (200) comprenant un régulateur de vitesse (210) dans une première position engagée (210a) pendant qu'un actionneur (120) disposé en aval du mécanisme de régulation de vitesse (200) dans la direction d'acheminement (101) et couplé au mécanisme de régulation de vitesse (200) via un mécanisme de couplage (400) est dans une position de maintien (120b) ;
- de cessation de la régulation de la vitesse des articles acheminés en déplaçant les régulateurs de vitesse (210) dans une seconde position libre (210b) lorsque l'actionneur (120) est déplacé dans une position de déclenchement (120b) ;
- le régulateur de vitesse comprenant un rouleau de régulation de vitesse (210) en contact avec deux rouleaux de convoyeur adjacents (111) de la ligne de convoyeur dans sa première position engagée (210a), **caractérisé en ce que** la vitesse est régulée par deux, trois ou plus mécanismes de régulation de vitesse (200) couplés à l'actionneur (120) par le mécanisme de couplage (400),
- et dans lequel un mécanisme d'arrêt (130) comprend un élément d'arrêt (131) mobile entre une position d'arrêt dans laquelle l'élément d'arrêt (131) s'étend à travers la surface de support (100) et amène un article acheminé (1) sur la surface de support à être arrêté, et une position de libération dans laquelle l'élément d'arrêt (131) est situé en dessous de la surface de support et n'amène pas un article acheminé sur la surface de support à être arrêté,
- dans lequel le mécanisme d'arrêt (130) est couplé à l'actionneur (120) de sorte que l'élément d'arrêt (131) soit dans sa position d'arrêt lorsque l'actionneur (120) est dans sa position de maintien (120a) et que l'élément d'arrêt (131) soit dans sa position de libération lorsque l'actionneur (120) est dans sa position de déclenchement (120b).
